# FASCICULE DE BREVET EUROPEEN

(11) **EP 3 704 071 B1**
(45) Date de publication et mention de la délivrance du brevet: **28.07.2021**
(21) Numéro de dépôt: 18808425.5
(22) Date de dépôt: 24.10.2018
(51) Int. Cl.: C03C 17/36

(54) **SUBSTRAT MUNI D'UN EMPILEMENT A PROPRIETES THERMIQUES.**
SUBSTRAT MIT EINEM STAPEL MIT WÄRMEEIGENSCHAFTEN
SUBSTRATE PROVIDED WITH A STACK HAVING THERMAL PROPERTIES

(30) Priorité: 30.10.2017 FR 1760237
(43) Date de publication de la demande: 09.09.2020
(73) Titulaire: SAINT-GOBAIN GLASS FRANCE, 92400 Courbevoie (FR)
(72) Inventeur: WANAKULE, Nissita, 75019 Paris (FR); RONDEAU, Véronique, 92600 Asnieres sur Seine (FR); ONGARELLO, Tommaso, 92350 Le Plessis Robinson (FR)
(74) Mandataire: Saint-Gobain Recherche
(86) Numéro de dépôt international: PCT/FR2018/052641
(87) Numéro de publication internationale: WO 2019/086784

(56) Documents cités:
- WO-A1-2011/147875
- WO-A1-2017/006030
- US-A1- 2011 169 402

## Description

L'invention concerne un matériau, tel qu'un vitrage, comprenant un substrat transparent revêtu d'un empilement de couches minces comprenant plusieurs couches fonctionnelles pouvant agir sur le rayonnement solaire et/ou le rayonnement infrarouge. L'invention concerne également les vitrages comprenant ces matériaux ainsi que l'utilisation de tels matériaux pour fabriquer des vitrages d'isolation thermique et/ou de protection solaire.

Ces vitrages peuvent être destinés aussi bien à équiper les bâtiments que les véhicules, en vue notamment de diminuer l'effort de climatisation et/ou d'empêcher une surchauffe excessive, vitrages dits « de contrôle solaire » et/ou diminuer la quantité d'énergie dissipée vers l'extérieur, vitrages dits « bas émissifs » entraînée par l'importance toujours croissante des surfaces vitrées dans les bâtiments et les habitacles de véhicules.

Selon les climats des pays où sont installés ces vitrages, les performances en termes de transmission lumineuse et de facteur solaire recherchées peuvent varier dans une certaine gamme. La transmission lumineuse doit être suffisamment faible pour supprimer l'éblouissement et suffisamment élevée pour que la diminution de la quantité de lumière pénétrant à l'intérieur de l'espace délimité par ledit vitrage ne rende pas obligatoire l'utilisation de la lumière artificielle. Par exemple, dans les pays où les niveaux d'ensoleillement sont élevés, il existe une demande forte de vitrage présentant une transmission lumineuse de l'ordre ou supérieur à 50 % et de préférence la plus élevée possible pour des valeurs de facteur solaire basses, typiquement inférieures ou égales à 30 %, c'est-à-dire dont la sélectivité est de l'ordre de 2 ou légèrement inférieure.

Des vitrages comprenant des substrats transparents revêtus d'un empilement de couches minces comprenant trois couches fonctionnelles métalliques, chacune disposée entre deux revêtements diélectriques ont été proposés afin d'améliorer la protection solaire tout en conservant une transmission lumineuse suffisante. Ces empilements sont généralement obtenus par une succession de dépôts effectués par pulvérisation cathodique éventuellement assistée par champ magnétique. Ces vitrages sont qualifiés de sélectifs car ils permettent :
- de diminuer la quantité d'énergie solaire pénétrant à l'intérieur des bâtiments en présentant un faible facteur solaire (FS ou g),
- de garantir une transmission lumineuse suffisante,
- de présenter une faible émissivité pour réduire la déperdition de chaleur par le rayonnement infrarouge de grande longueur d'onde.

Selon l'invention, on entend par :
- facteur solaire « g », le rapport en pourcentage entre l'énergie totale entrant dans le local à travers le vitrage et l'énergie solaire incidente,
- sélectivité « s », le rapport entre la transmission lumineuse et le facteur solaire TL/g.

Les matériaux de l'art antérieur permettent d'obtenir des valeurs de transmission lumineuse, de facteur solaire et d'émissivité dans les gammes recherchées. Cependant, l'aspect esthétique et les propriétés en réflexion de tels vitrages ne donnent pas entière satisfaction et présentent notamment les inconvénients suivants :
- des couleurs en réflexion extérieure non neutres ou une coloration prononcée dans des teintes non désirées, et
- des niveaux de réflexion extérieure trop faible.

Enfin, il existe actuellement une forte demande pour des vitrages présentant un aspect argent brillant en réflexion extérieure. Un tel aspect est obtenu en maximisant la réflexion lumineuse extérieure (R_{Lext.}) du vitrage.

Les matériaux actuellement sur le marché permettant d'obtenir cet aspect argent brillant en réflexion côté extérieur comprennent :
- des substrats revêtus d'empilements déposés par voie chimique (CVD),
- des substrats revêtus d'empilements déposés par pulvérisation cathodique comprenant des couches fonctionnelles qui ne sont pas à base d'argent mais par exemple à base de niobium.

Ces matériaux ne permettent pas d'obtenir les performances optiques et énergétiques recherchées. En effet, ces matériaux ne présentent pas à la fois un faible facteur solaire (FS ou g), une transmission lumineuse suffisante et une sélectivité élevée.

L'objectif de l'invention est de développer un matériau présentant à la fois un aspect argent brillant et les propriétés de contrôle solaire recherchées dans le domaine. Selon l'invention, on cherche donc à minimiser le facteur solaire, tout en gardant une transmission lumineuse adaptée pour permettre une bonne isolation et une bonne vision, en particulier supérieure à 50%, de manière à obtenir une sélectivité proche de 2, étant entendu que l'aspect argent brillant extérieur suppose par ailleurs une réflexion lumineuse extérieure suffisamment élevée, c'est-à-dire d'au moins 25% et une coloration relativement neutre du vitrage en réflexion ou alternativement une légère coloration bleue. Selon un aspect secondaire de la présente invention, on cherche également à obtenir un vitrage dont la couleur en transmission (importante pour la vision depuis l'intérieur vers l'extérieur du bâtiment) soit la plus neutre possible ou alternativement présente une légère coloration bleue.

La complexité des empilements comprenant trois couches fonctionnelles rend difficile l'amélioration combinée de ces propriétés de réflexion et de transmission de la lumière visible sans nuire aux performances de contrôle solaire.

Il existe donc un besoin de développer un matériau pour une utilisation dans un vitrage permettant :
- de minimiser le facteur solaire,
- d'obtenir en réflexion un aspect argent brillant pour l'esthétique,
- d'augmenter la réflexion côté extérieur pour notamment préserver l'intimité (effet « privacy »)
- de garantir une transmission lumineuse la plus élevée possible pour garantir une bonne vision au travers du matériau,
- si possible et additionnellement d'obtenir une coloration neutre en transmission du matériau ou du vitrage incorporant le matériau.

Un problème technique proche a déjà été évoqué dans la demande internationale de brevet N° WO2017/006030 A1. On y décrit un empilement comprenant trois couches fonctionnelles en argent, présentant une réflexion lumineuse extérieure de 30% pour une transmission lumineuse de 50%, la sélectivité étant de l'ordre de 2. Selon l'enseignement de cette publication, chaque revêtement diélectrique comprend au moins une couche diélectrique haut indice dont l'indice de réfraction est d'au moins 2,15 et dont l'épaisseur optique supérieure à 20 nm. Cette publication montre des exemples avec l'épaisseur de la première couche fonctionnelle qui est inférieure à l'épaisseur des deuxième et troisième couches fonctionnelles. Cette valeur de la transmission lumineuse apparait cependant être une valeur cible et limite atteinte pour les configurations décrites mais aucune indication n'est fournie dans cette publication sur la possibilité d'augmenter encore la valeur de la transmission lumineuse et les modifications à effectuer pour y arriver.

La demande internationale de brevet N° WO2011/147875 décrit quant à elle des empilements comprenant trois couches fonctionnelles en argent dans lesquels la seconde couche fonctionnelle présente une épaisseur physique (géométrique) inférieure à celle des autres couches fonctionnelles. Cette demande ne décrit cependant pas de vitrages présentant une forte réflexion extérieure, propre à l'obtention des vitrages recherchés selon l'invention présentant un aspect argent brillant en réflexion extérieure, comme expliqué précédemment.

Le demandeur a découvert de manière surprenante qu'en sélectionnant les épaisseurs des trois couches fonctionnelles combiné à un choix spécifique des épaisseurs des revêtements diélectriques, il est possible d'obtenir un matériau susceptible de présenter les propriétés recherchées. Un aspect brillant argent et une réflexion côté extérieur élevée peuvent notamment être obtenus, ainsi qu'une transmission lumineuse sensiblement supérieure à 50%, tout en en conservant les propriétés d'isolation thermiques, notamment une sélectivité légèrement inférieure à 2.

La solution de l'invention présente ainsi un excellent compromis entre les performances optiques, thermiques, la transparence et l'aspect esthétique.

L'invention a d'abord pour objet un matériau selon la revendication 1. Ce matériau comprend un substrat transparent revêtu sur une face d'un empilement de couches minces comportant successivement à partir de ladite face une alternance de trois couches métalliques fonctionnelles à base d'argent dénommées en partant du substrat première, deuxième et troisième couches fonctionnelles, respectivement Ag1, Ag2 et Ag3 , et de quatre revêtements diélectriques dénommés en partant du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches, de manière que chaque couche métallique fonctionnelle soit disposée entre deux revêtements diélectriques, ledit matériau étant remarquable en ce que :
- l'épaisseur géométrique de la seconde couche fonctionnelle Ag2 est inférieure à l'épaisseur de la première couche fonctionnelle Ag1,
- l'épaisseur géométrique de la seconde couche fonctionnelle Ag2 est inférieure à l'épaisseur de la troisième couche fonctionnelle Ag3,
- le revêtement diélectrique M2 présente une épaisseur optique Eo2 inférieure aux épaisseurs optiques Eo1, Eo3, Eo4 respectivement des revêtements diélectriques M1, M3 et M4.

En ajustant ainsi les épaisseurs des trois couches fonctionnelles et des revêtements diélectriques de l'empilement, la transparence du vitrage peut être contrôlée de façon à obtenir des valeurs de transmission lumineuse T_{L} faibles, sensiblement supérieures à 50,0 % (comprise entre 50,0 % et 57,0 %, de préférence à la fois supérieure à 50,0 % et inférieure à 57,0 %), gamme adaptée tout particulièrement pour les vitrages destinés à être utilisés dans des régions à fort ensoleillement. Selon un avantage majeur de l'invention, l'obtention de l'aspect visuel satisfaisant, avec notamment des couleurs en réflexion extérieure particulières ainsi que des valeurs de réflexion extérieure suffisamment élevées, ne s'opèrent pas au détriment des performances de protection solaire.

Ledit empilement de couches minces peut comporter successivement à partir de ladite face du substrat une alternance de
- uniquement trois couches métalliques fonctionnelles à base d'argent dénommées en partant du substrat première, deuxième et troisième couches fonctionnelles, respectivement Ag1, Ag2 et Ag3 ,
- et de uniquement quatre revêtements diélectriques dénommés en partant du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches,
   de manière à ce que chaque couche métallique fonctionnelle soit disposée entre deux revêtements diélectriques.

Les caractéristiques préférées qui figurent dans la suite de la description sont applicables aussi bien au procédé selon l'invention que, le cas échéant, aux produits, c'est-à-dire aux matériaux ou aux vitrages comprenant le matériau.

On donne ci-après certains modes de réalisation préférés mais non limitatifs de la présente invention :
- Le revêtement diélectrique M2 présente une épaisseur optique Eo2 comprise entre 40 et 90 nm, de préférence comprise entre 50 et 70 nm.
- L'épaisseur géométrique de la deuxième couche fonctionnelle Ag2 est comprise entre 2 et 10 nanomètres, de préférence entre 5 et 10 nanomètres, voire entre 5 et 8 nanomètres.
- L'épaisseur géométrique de la première couche fonctionnelle Ag1 est comprise entre 8 et 20 nanomètres, de préférence entre 10 et 18 nanomètres, voire entre 10 et 16 nanomètres.
- L'épaisseur géométrique de la troisième couche fonctionnelle Ag3 est comprise entre 8 et 20 nanomètres, de préférence entre 10 et 18 nanomètres, voire entre 12 et 15 nanomètres.
- L'épaisseur géométrique cumulée des couches fonctionnelles Ag1, Ag2 et Ag3 est comprise entre 25 et 50 nanomètres, de préférence est comprise entre 30 et 40 nanomètres.
- Le revêtement diélectrique M3 présente une épaisseur optique Eo3 supérieure aux épaisseurs optiques Eo1 et Eo4 respectivement des revêtements diélectriques M1 et M4.
- Les épaisseurs optiques des revêtements diélectriques sont telles que : Eo2 < Eo4 < Eo1 < Eo3.
- Les épaisseurs optiques Eo3 et Eo2 respectivement des revêtements diélectriques M3 et M2 sont telles que Eo3 > 1,5 Eo2, de préférence telles que Eo3 > 2 Eo2 et de manière très préférée en ce que Eo3 > 2,5 Eo2.
- Les épaisseurs optiques Eo3 et Eo4 respectivement des revêtements diélectriques M3 et M4 sont telles que Eo3 > 1,5 Eo4 et de préférence telles que Eo3 > 2 Eo4.
- Les épaisseurs optiques Eo3 et Eo1 respectivement des revêtements diélectriques M3 et M1 sont telles que Eo3 > 1,5 Eo1.
- L'épaisseur optique Eo1 du revêtement diélectrique M1 est comprise entre 75 et 120 nm, de préférence Eo1 est comprise entre 80 et 100 nm,
- L'épaisseur optique Eo2 du revêtement diélectrique M2 est comprise entre 50 et 70 nm,
- L'épaisseur optique Eo3 du revêtement diélectrique M3 est comprise entre 130 et 190 nm, de préférence Eo3 est comprise entre 140 et 180 nm, de préférence encore est comprise entre 150 et 175 nm,
- L'épaisseur optique Eo4 du revêtement diélectrique M4 est comprise entre 60 et 110 nm, de préférence Eo4 est comprise entre 70 et 90 nm,
- Le rapport de l'épaisseur de la première couche fonctionnelle Ag1 sur l'épaisseur de la deuxième couche fonctionnelle Ag2 est supérieur à 1,3.
- Le rapport de l'épaisseur de la troisième couche fonctionnelle Ag3 sur l'épaisseur de la seconde couche fonctionnelle Ag2 est supérieur à 1,3.
- L'épaisseur de la troisième couche fonctionnelle Ag3 est supérieure à l'épaisseur de la première couche fonctionnelle Ag1. Dans une telle configuration, le rapport de l'épaisseur de la première couche fonctionnelle Ag3 sur l'épaisseur de la deuxième couche fonctionnelle Ag1 est avantageusement supérieur à 1,1, de préférence encore supérieur à 1,2, ou même supérieur à 1,3.
- L'empilement comprend en outre au moins une couche de blocage située au contact d'une couche métallique fonctionnelle, et de préférence chaque couche fonctionnelle est au contact d'une couche de blocage situées au-dessus d'elle.
- L'empilement comprend, en partant du substrat transparent :
   - un premier revêtement diélectrique M1 comprenant de préférence au moins une couche diélectrique à fonction barrière et une couche diélectrique à fonction stabilisante,
   - éventuellement une couche de blocage,
   - une première couche fonctionnelle Ag1,
   - éventuellement une couche de blocage,
   - un deuxième revêtement diélectrique M2 comprenant de préférence au moins un couche diélectrique à fonction stabilisante inférieure, une couche diélectrique à fonction barrière et une couche diélectrique à fonction stabilisante supérieure,
   - éventuellement une couche de blocage,
   - une deuxième couche fonctionnelle Ag2,
   - éventuellement une couche de blocage,
   - un troisième revêtement diélectrique M3 comprenant de préférence au moins un couche diélectrique à fonction stabilisante inférieure, une couche diélectrique à fonction barrière et une couche diélectrique à fonction stabilisante supérieure,
   - éventuellement une couche de blocage,
   - une troisième couche fonctionnelle Ag3,
   - éventuellement une couche de blocage,
   - un quatrième revêtement diélectrique M4 comprenant de préférence au moins une couche diélectrique à fonction stabilisante, une couche diélectrique à fonction barrière et éventuellement une couche de protection.

L'invention se rapporte en outre à un vitrage comprenant au moins un matériau tel que décrit précédemment. Un tel vitrage peut être sous forme de vitrage monolithique, feuilleté ou multiple.

Toutes les caractéristiques lumineuses présentées dans la description sont obtenues selon les principes et méthodes décrits dans la norme européenne EN 410 se rapportant à la détermination des caractéristiques lumineuses et solaires des vitrages utilisés dans le verre pour la construction.

De manière conventionnelle, les indices de réfraction sont mesurés à une longueur d'onde de 550 nm. Les facteurs de transmission lumineuse T_{L} et de réflexion lumineuse R_{L} sont mesurés sous l'illuminant D65 avec un champ de vision de 2°.

Sauf indication contraire, toutes les valeurs et gammes de valeurs des caractéristiques optiques et thermiques sont données pour un vitrage double constitué de substrats clairs de type verre sodo-calcique ordinaire dont un premier substrat de 6 mm portant l'empilement de couches minces, d'un espace intercalaire de 16 mm rempli d'argon à raison de 90 % et d'air à raison de 10 % et d'un autre substrat clair également de type verre sodo-calcique, non-revêtu, d'une épaisseur de 4 mm. Le premier substrat revêtu est placé dans le double vitrage de sorte que l'empilement de couches minces se trouve en face 2 dudit vitrage. La réflexion lumineuse extérieure R_{Lext} du double vitrage est mesurée du côté du premier substrat, tandis que la réflexion R_{Lint} du double vitrage est mesurée du côté du second substrat (ne comprenant pas d'empilement).

Sauf mention contraire, les épaisseurs évoquées dans le présent document sans autres précisions sont des épaisseurs physiques, ou encore réelles ou géométriques, dénommées Ep et sont exprimées en nanomètres. A contrario, une épaisseur optique Eo d'une couche ou d'un ensemble de couches est définie comme l'épaisseur physique de la couche considérée multipliée par son indice de réfraction (n) à la longueur d'onde de 550 nm : Eo = n₅₅₀ × Ep. L'indice de réfraction étant une valeur adimensionnelle, on peut considérer que l'unité de l'épaisseur optique est la même que celle choisie pour l'épaisseur physique. Dans la présente description l'unité choisie pour les épaisseurs est le nanomètre, sauf indication contraire. Si un revêtement diélectrique est composé de plusieurs couches diélectriques, l'épaisseur optique du revêtement diélectrique correspond à la somme des épaisseurs optiques des différentes couches diélectriques constituant le revêtement diélectrique.

Dans toute la description le substrat selon l'invention est considéré posé horizontalement. L'empilement de couches minces est déposé au-dessus et au contact du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Au sens de la présente invention, les qualifications « première », « deuxième », « troisième » et « quatrième » pour les couches fonctionnelles ou les revêtements diélectriques sont définies en partant du substrat porteur de l'empilement et en se référant aux couches ou revêtements de même fonction. Par exemple, la couche fonctionnelle la plus proche du substrat est la première couche fonctionnelle, la suivante en s'éloignant du substrat est la deuxième couche fonctionnelle, etc.

Comme indiqué précédemment, l'invention concerne également un vitrage comprenant un matériau selon l'invention. De manière conventionnelle, les faces d'un vitrage sont désignées à partir de l'extérieur du bâtiment et en numérotant les faces des substrats de l'extérieur vers l'intérieur de l'habitacle ou du local qu'il équipe. Cela signifie que la lumière solaire incidente traverse les faces dans l'ordre croissant de leur numéro.

L'empilement est de préférence positionné dans le vitrage de sorte que la lumière incidente provenant de l'extérieur traverse le premier revêtement diélectrique avant de traverser la première couche métallique fonctionnelle. L'empilement n'est pas déposé sur la face du substrat définissant la paroi extérieure du vitrage mais sur la face intérieure de ce substrat. L'empilement est donc avantageusement positionné en face 2, la face 1 du vitrage étant la face la plus à l'extérieur du vitrage, comme habituellement.

En choisissant de monter de cette façon le vitrage, le premier revêtement diélectrique (M1) est situé entre l'extérieur et toutes les couches fonctionnelles à base d'argent de l'empilement.

De préférence, l'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

L'invention concerne également le procédé d'obtention d'un matériau selon l'invention, dans lequel on dépose les couches de l'empilement par pulvérisation cathodique magnétron.

Les couches fonctionnelles métalliques à base d'argent comprennent au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'empilement peut comprendre en outre au moins une couche de protection supérieure, notamment à base de TiZr (ou TiZrO).

Des couches de blocage peuvent être présentes dans l'empilement selon l'invention. Elles ont traditionnellement pour fonction de protéger les couches fonctionnelles d'une éventuelle dégradation lors du dépôt du revêtement antireflet supérieur et/ou lors d'un éventuel traitement thermique à haute température, du type recuit, bombage et/ou trempe.

Les couches de blocage sont par exemple choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome et le niobium telles que Ti, TiN, TiOx, Nb, NbN, Ni, NiN, Cr, CrN, NiCr, NiCrN ou encore NbNOx, NiCrOx.

L'épaisseur géométrique de telles couches est de l'ordre de quelques nanomètres, généralement inférieure à 7 nanomètres et le plus souvent proche du nanomètre ou même inférieure au nanomètre.

Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Selon des modes de réalisation avantageux de l'invention, la ou les couches de blocage satisfont une ou plusieurs des conditions suivantes :
- chaque couche métallique fonctionnelle est au contact d'au moins une couche de blocage choisie parmi une sous-couche de blocage et une surcouche de blocage, et/ou
- l'épaisseur de chaque couche de blocage est d'au moins 0,1 nm, de préférence comprise entre 0,1 et 1,0 nm, et/ou
- l'épaisseur totale de toutes les couches de blocage au contact des couches fonctionnelles est comprise entre 0,1 et 2 nm en incluant ces valeurs, de préférence entre 0,3 et 1,5 nm, voire 0,5 et 1,0 nm.

Selon des modes de réalisation avantageux de l'invention, les revêtements diélectriques satisfont une ou plusieurs des conditions suivantes :
- les revêtements diélectriques comprennent au moins une couche diélectrique à base d'oxyde ou de nitrure d'un ou plusieurs éléments choisis parmi le silicium, le titane, le zirconium, l'aluminium, l'étain, le zinc, et/ou
- au moins un revêtement diélectrique comporte au moins une couche diélectrique à fonction barrière, et/ou
- chaque des revêtements diélectriques comporte au moins une couche diélectrique à fonction barrière, et/ou
- les couches diélectriques à fonction barrière sont à base de composés de silicium et/ou d'aluminium choisis parmi les oxydes tels que SiO₂ et Al₂O₃ ou leur mélange, les nitrures de silicium Si₃N₄ et AIN ou leur mélange et les oxynitures SiOₓN_{y} et AlOₓN_{y} ou leur mélange et/ou
- les couches diélectriques à fonction barrière sont à base de composés de silicium et/ou d'aluminium comprennent éventuellement au moins un autre élément, comme l'aluminium, le hafnium et le zirconium, et/ou
- au moins un revêtement diélectrique comprend au moins une couche diélectrique à fonction stabilisante, et/ou
- chaque revêtement diélectrique comprend au moins une couche diélectrique à fonction stabilisante, et/ou
- les couches diélectriques à fonction stabilisante sont de préférence à base d'oxyde choisi parmi l'oxyde de zinc, l'oxyde d'étain, l'oxyde de zirconium ou un mélange d'au moins deux d'entre eux,
- les couches diélectriques à fonction stabilisante sont de préférence à base d'oxyde cristallisé, notamment à base d'oxyde de zinc, éventuellement dopé à l'aide d'au moins un autre élément, comme l'aluminium, et/ou
- chaque couche fonctionnelle est au-dessus d'un revêtement diélectrique dont la couche supérieure est une couche diélectrique à fonction stabilisante, de préférence à base d'oxyde de zinc et/ou en-dessous d'un revêtement diélectrique dont la couche inférieure est une couche diélectrique à fonction stabilisante, de préférence à base d'oxyde de zinc.

De préférence, chaque revêtement diélectrique est constitué uniquement d'une ou de plusieurs couches diélectriques. De préférence, il n'y a donc pas de couche absorbante dans les revêtements diélectriques afin de ne pas diminuer la transmission lumineuse.

Les empilements de l'invention peuvent comprendre des couches diélectriques à fonction barrière. On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les matériaux constitutifs de la couche diélectrique à fonction barrière ne doivent donc pas subir de modification chimique ou structurelle à haute température qui entraînerait une modification de leurs propriétés optiques. La ou les couches à fonction barrière sont de préférence également choisies en un matériau apte à faire barrière au matériau constitutif de la couche fonctionnelle. Les couches diélectriques à fonction barrière permettent donc à l'empilement de subir sans évolution optique trop significative des traitements thermiques du type recuit, trempe ou bombage.

Les empilements de l'invention peuvent comprendre des couches diélectriques à fonction stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La ou les couches diélectriques à fonction stabilisante peuvent se trouver directement au contact d'une couche fonctionnelle ou séparées par une couche de blocage.

De préférence, la dernière couche diélectrique de chaque revêtement diélectrique situé en-dessous d'une couche fonctionnelle est une couche diélectrique à fonction stabilisante. En effet, il est avantageux d'avoir une couche à fonction stabilisante, par exemple, à base d'oxyde de zinc en-dessous d'une couche fonctionnelle, car elle facilite l'adhésion et la cristallisation de la couche fonctionnelle à base d'argent et augmente sa qualité et sa stabilité à haute température.

Il est également avantageux d'avoir une couche fonction stabilisante, par exemple, à base d'oxyde de zinc au-dessus d'une couche fonctionnelle, pour en augmenter l'adhésion et s'opposer de manière optimale à la diffusion du côté de l'empilement opposé au substrat.

La ou les couches diélectriques à fonction stabilisante peuvent donc se trouver au-dessus et/ou en dessous d'au moins une couche fonctionnelle ou de chaque couche fonctionnelle, soit directement à son contact ou soit séparées par une couche de blocage.

Avantageusement, chaque couche diélectrique à fonction barrière est séparée d'une couche fonctionnelle par au moins une couche diélectrique à fonction stabilisante.

Cette couche diélectrique à fonction stabilisante peut avoir une épaisseur d'au moins 4 nm, notamment une épaisseur comprise entre 4 et 10 nm et mieux de 8 à 10 nm.

L'empilement de couches minces peut éventuellement comprendre une couche de protection. La couche de protection est de préférence la dernière couche de l'empilement, c'est-à-dire la couche la plus éloignée du substrat revêtu de l'empilement. Ces couches supérieures de protection sont considérées comme comprises dans le quatrième revêtement diélectrique. Ces couches ont en général une épaisseur comprise entre 2 et 10 nm, de préférence 2 et 5 nm. Cette couche de protection peut être choisie parmi une couche de titane, de zirconium, d'hafnium, de zinc et/ou d'étain, ce ou ces métaux étant sous forme métallique, oxydée ou nitrurée ou oxynitrurée.

La couche de protection peut par exemple être choisie parmi une couche d'oxyde de titane, une couche d'oxyde de zinc et d'étain ou une couche d'oxyde de titane et de zirconium.

Un mode de réalisation particulièrement avantageux concerne un substrat revêtu d'un empilement défini en partant du substrat transparent comprenant :
- un premier revêtement diélectrique comprenant de préférence au moins une couche diélectrique à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant de préférence au moins un couche diélectrique à fonction stabilisante inférieure, une couche diélectrique à fonction barrière et une couche diélectrique à fonction stabilisante supérieure,
- éventuellement une couche de blocage,
- une deuxième couche fonctionnelle,
- éventuellement une couche de blocage,
- un troisième revêtement diélectrique comprenant de préférence au moins un couche diélectrique à fonction stabilisante inférieure, une couche diélectrique à fonction barrière et une couche diélectrique à fonction stabilisante supérieure,
- éventuellement une couche de blocage,
- une troisième couche fonctionnelle,
- éventuellement une couche de blocage,
- un quatrième revêtement diélectrique comprenant de préférence au moins une couche diélectrique à fonction stabilisante et une couche diélectrique à fonction barrière et éventuellement une couche de protection.

Selon d'autres modes possibles et avantageux de réalisation de la présente invention :
- Chaque revêtement diélectrique en-dessous d'une couche fonctionnelle comporte une dernière couche stabilisante à base d'oxyde de zinc cristallisé, et qui est au contact de la couche fonctionnelle déposée juste au-dessus.
- Chaque revêtement diélectrique au-dessus d'une couche fonctionnelle comporte une première couche stabilisante à base d'oxyde de zinc cristallisé, et qui est au contact de la couche fonctionnelle déposée juste au-dessus.
- Chaque revêtement diélectrique comporte une couche diélectrique à fonction barrière à base de nitrure de silicium, dopé à l'aluminium appelée ici Si₃N₄.
- Chaque couche fonctionnelle métallique est en-dessous et au contact d'une couche de blocage.
- L'empilement comprend en outre une couche de protection en TiZr ou en oxyde de titane et de zirconium d'épaisseur inférieure à 5 nanomètres.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le matériau, c'est-à-dire le substrat revêtu de l'empilement, peut subir un traitement thermique à température élevée tel qu'un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu de l'empilement peut donc être bombé et/ou trempé.

Le vitrage de l'invention peut être sous forme de vitrage monolithique, feuilleté ou multiple, en particulier double vitrage ou triple vitrage.

Dans le cas d'un vitrage monolithique ou multiple, l'empilement est de préférence déposé en face 2, c'est-à-dire qu'il se trouve sur le substrat définissant la paroi extérieure du vitrage et plus précisément sur la face intérieure de ce substrat.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un vitrage multiple comprend au moins deux substrats maintenus à distance de manière à délimiter une cavité remplie par un gaz isolant. Les matériaux selon l'invention conviennent tout particulièrement lorsqu'ils sont utilisés dans des double-vitrages à isolation thermique renforcée (ITR).

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

De la même manière, un triple vitrage comporte 6 faces, la face 1 est à l'extérieur du bâtiment (paroi extérieure du vitrage), la face 6 à l'intérieur du bâtiment (paroi intérieure du vitrage) et les faces 2 à 5 sont à l'intérieur du triple vitrage.

Un vitrage feuilleté comporte au moins une structure de type premier substrat / feuille(s) / deuxième substrat. L'empilement de couches minces est positionné sur l'une au moins des faces d'un des substrats. L'empilement peut être sur la face du deuxième substrat non au contact de la feuille, de préférence polymère. Ce mode de réalisation est avantageux lorsque le vitrage feuilleté est monté en double vitrage avec un troisième substrat.

Le vitrage selon l'invention, utilisé comme vitrage monolithique ou dans un vitrage multiple de type double-vitrage, présente des couleurs en réflexion extérieure neutres, agréables et douces, dans la gamme des bleus ou bleus-verts (en particulier des couleurs dont la longueur d'onde dominante est de l'ordre de 450 à 500 nanomètres). De plus, cet aspect visuel reste quasiment inchangé quel que soit l'angle d'incidence avec lequel le vitrage est observé (incidence normale et sous angle). Cela signifie qu'un observateur n'a pas l'impression d'une inhomogénéité significative de teinte ou d'aspect.

Par « couleur dans le bleu-vert » au sens de la présente invention, il faut comprendre que dans le système de mesure de couleur L*a*b*, a* est compris entre -10,0 et 0,0, et b* est compris entre -10,0 et 0,0.

Le vitrage de l'invention présente de préférence des couleurs en réflexion côté extérieur dans le système de mesure de couleur L*a*b* :
- a* compris entre -5,0 et 0,0, et
- b* est compris entre -7,0 et 0,0.

Le vitrage de l'invention présente de préférence des couleurs en transmission dans le système de mesure de couleur L*a*b* avec a* compris entre -10,0 et 0,0, de préférence entre -5,0 et 0,0 et une valeur de b* négative ou si elle est positive proche de 0, notamment inférieure à 3,0.

Selon des modes de réalisation avantageux, le vitrage de l'invention sous forme d'un double vitrage comprenant l'empilement positionné en face 2 permet d'atteindre notamment les performances suivantes :
- un facteur solaire g inférieur ou égal à 30 % et
- une transmission lumineuse sensiblement supérieure à 50,0 % (comprise entre 50,0 % et 57,0 %, de préférence à la fois supérieure à 50,0 % et inférieure à 57,0 %) et
- une sélectivité élevée d'au moins 1,8, (notamment une sélectivité S de l'ordre de 1,8 pour un double vitrage avec un empilement de couche minces selon l'invention en face 2) et/ou
- une réflexion lumineuse côté extérieur, par ordre de préférence croissant, supérieure ou égale à 20,0 %, comprise entre 20,0% et 35,0%, supérieure ou égale à 25,0 %, comprise entre 25,0% et 35,0%, supérieure ou égale à 26 %, comprise entre 26,0% et 35,0%, voire de l'ordre de 30,0 %, comprise entre 30,0% et 35,0%.

Les détails et caractéristiques avantageuses de l'invention ressortent des exemples non limitatifs suivants, illustrés à l'aide de la figure jointe.

Les proportions entre les différents éléments ne sont pas respectées afin de faciliter la lecture des figures.

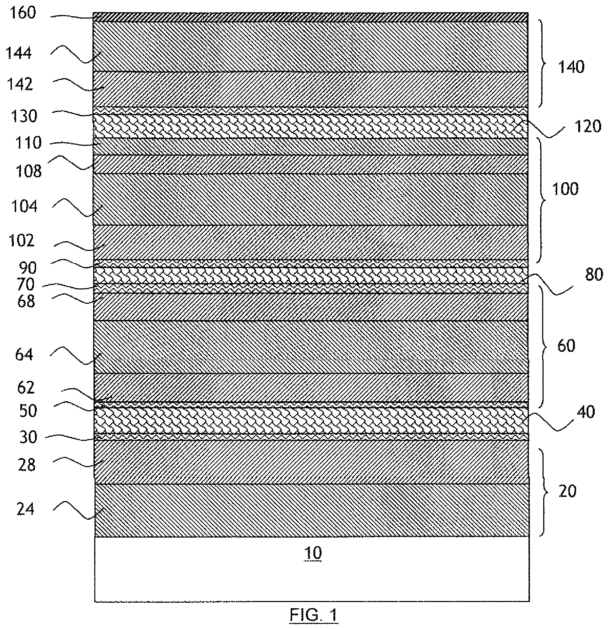

La figure 1 illustre une structure d'empilement selon l'invention à trois couches métalliques fonctionnelles 40, 80, 120, cette structure étant déposée sur un substrat 10 verrier, transparent. Chaque couche fonctionnelle 40, 80, 120 est disposée entre deux revêtements diélectriques 20, 60, 100, 140 de telle sorte que :
- la première couche fonctionnelle 40 en partant du substrat est disposée entre les revêtements diélectrique 20, 60,
- la deuxième couche fonctionnelle 80 est disposée entre les revêtements diélectrique 60, 100 et
- la troisième couche fonctionnelle 120 est disposée entre les revêtements diélectriques 100, 140.

Ces revêtements diélectriques 20, 60, 100, 140 comportent chacun au moins une couche diélectrique 24, 28 ; 62, 64, 68 ; 102, 104, 108 ; 142, 144.

L'empilement peut comprendre également :
- des sous-couches de blocage 30, 70 situées au contact d'une couche fonctionnelle,
- des surcouches de blocage 50, 90 et 130 situées au contact d'une couche fonctionnelle,
- une couche de protection 160, par exemple en TiZr ou en oxyde de titane et de zirconium.

### Exemples :

### I. Préparation des substrats : Empilements, conditions de dépôt

Des empilements de couches minces définis ci-après sont déposés sur des substrats en verre sodo-calcique clair d'une épaisseur de 6 mm.

Dans les exemples de l'invention :
- les couches fonctionnelles sont des couches d'argent (Ag),
- les couches de blocage sont des couches métalliques en alliage de nickel et de chrome (NiCr),
- les couches barrières sont à base de nitrure de silicium, dopé à l'aluminium (Si₃N₄:Al),
- les couches stabilisantes sont en oxyde de zinc dopé aluminium (ZnO).

Les conditions de dépôt des couches, qui ont été déposées par pulvérisation (pulvérisation dite « cathodique magnétron »), sont résumées dans le tableau 1.

**Tableau 1**

| | Cible employée | Pression de dépôt | Gaz | n à 550 nm |
|---|---|---|---|---|
| Si₃N₄ | Si:Al à 92:8 (% en poids) | 3,2.10⁻³ mbar | Ar /(Ar + N2) à 55 % | 2,03 |
| ZnO | Zn:Al à 98:2 (% en poids) | 1,8.10⁻³ mbar | Ar /(Ar + O2) à 63 % | 1,95 |
| SnZnO | Zn:68 Sn:30 Sb: 2 (% en poids) | 3.7.10⁻³ mbar | Ar /(Ar + O2) à 59 % | 2,04 |
| NiCr | Ni (80% at.) ; Cr (20% at.) | 2-3. 10⁻³ mbar | Ar à 100 % | - |
| Ag | Ag | 3.10-3 mbar | Arà 100 % | - |

| | | | | |
|---|---|---|---|---|
| At. = atomique | | | | |

Le tableau 2 liste les matériaux et les épaisseurs physiques en nanomètres (sauf autre indication) de chaque couche et l'épaisseur optique (en nanomètres) correspondante de chaque revêtement diélectrique en fonction de leur position vis-à-vis du substrat porteur de l'empilement (dernière ligne en bas du tableau).

**Tableau 2**

| | **n° couche sur** **figure1** | **Ex1 (inv)** | **Ex2 (inv)** | **Ex3 (comp)** | **Ex4 (comp)** | **Ex5 (comp)** |
|---|---|---|---|---|---|---|
| Eo du revêtement diélectrique M4 avec : | 140 | 75 | 75 | 51 | 79 | 84 |
| Ep (ZnO) | 144 | 8 | 8 | NA | NA | NA |
| Ep (Si₃N₄:Al) | 142 | 28,5 | 28,5 | NA | NA | NA |
| Ep (NiCr) (couche blocage) | 130 | 1 | 0,2 | - | - | 0,1 |
| Ep (Ag3) (couche fonctionnelle) | 120 | 14,5 | 13,8 | 13 | 22 | 15,5 |
| Eo du revêtement diélectrique M3 avec : | 100 | 169 | 153 | 100 | 125 | 170 |
| Ep (ZnO) | 110 | 8 | 8 | NA | NA | NA |
| Ep (SnZnO) | 108 | 8 | 8 | NA | NA | NA |
| Ep (Si₃N₄:Al) | 104 | 58 | 50 | NA | NA | NA |
| Ep (ZnO) | 102 | 8 | 8 | NA | NA | NA |
| NiCr (couche blocage) | 90 | 1,0 | 0,1 | - | - | 0,6 |
| Ep (Ag2) (couche fonctionnelle) | 80 | 8,0 | 5,0 | 11 | 6,5 | 15,8 |
| Ep (NiCr) (couche blocage) | 70 | 4,0 | 0,1 | - | - | 0 |
| Eo du revêtement diélectrique M2 avec : | 60 | 59 | 60 | 160 | 115 | 115 |
| Ep (ZnO) | 68 | 8 | 8 | NA | NA | NA |
| Ep (Si₃N₄:Al) | 64 | 13 | 13,8 | NA | NA | NA |
| Ep (ZnO) | 62 | 8 | 8 | NA | NA | NA |
| Ep (NiCr) (couche blocage) | 50 | 1,0 | 0,1 | - | - | 0,1 |
| Ep (Ag1) (couche fonctionnelle) | 40 | 10,5 | 15,8 | 14 | 8 | 7 |
| Ep (NiCr) (couche blocage) | 30 | 1,0 | 0,4 | - | - | - |
| Eo du revêtement diélectrique M1 avec : | 20 | 82 | 94 | 89 | 65 | 116 |
| Ep (ZnO) | 28 | 8 | 8 | NA | NA | NA |
| Ep (Si₃N₄:Al) | 24 | 32 | 37,8 | NA | NA | NA |
| Substrat verre (mm) | 10 | 6 | 6 | 6 | 6 | 6 |

| | | | | | | |
|---|---|---|---|---|---|---|
| *Ep : Epaisseur physique (nm) ; Eo : Epaisseur optique (nm). | | | | | | |

Les exemples 1 et 2 sont des exemples selon l'invention. Les exemples comparatifs 3 et 4 sont des exemples tels que décrits dans la demande internationale de brevet N° WO2011/147875. L'exemple comparatif 5 est conforme à l'exemple 1 de la demande internationale de brevet N° WO2017/006030.

### II. Performances « contrôle solaire » et colorimétrie

Le tableau 3 liste les principales caractéristiques optiques mesurées lorsque les empilements font partie d'un double vitrage de structure 6/16/4 : (ext.) verre de 6 mm / espace intercalaire de 16 mm rempli d'argon à 90 % / verre de 4 mm (int.), l'empilement étant positionné en face 2 (la face 1 du vitrage étant la face la plus à l'extérieur du vitrage, comme habituellement).

Pour ces doubles vitrages,
- TL indique : la transmission lumineuse dans le visible en %, mesurée selon l'illuminant D65 à 2° Observateur ;
- a*_{T} et b*_{T} indiquent les couleurs en transmission a* et b* dans le système L*a*b* mesurées selon l'illuminant D65 à 2° Observateur et mesurées perpendiculairement au vitrage ;
- Rₑₓₜ indique : la réflexion lumineuse dans le visible en %, mesurée selon l'illuminant D65 à 2° Observateur du côté de la face la plus à l'extérieur, la face 1 ;
- a*_{Rext} et b*_{Rext} indiquent les couleurs en réflexion a* et b* dans le système L*a*b* mesurées selon l'illuminant D65 à 2° Observateur du côté de la face la plus à l'extérieur et mesurées ainsi perpendiculairement au vitrage,
- R_{Lint} indique : la réflexion lumineuse dans le visible en %, mesurée selon l'illuminant D65 à 2° Observateur du côté de la face intérieur, la face 4 ;
- a*Rᵢₙₜ et b*Rᵢₙₜ indiquent les couleurs en réflexion a* et b* dans le système L*a*b* mesurées selon l'illuminant D65 à 2° Observateur du côté de la face intérieur et mesurées ainsi perpendiculairement au vitrage.

**Tableau 3**

| | **Valeur cible** | **Ex1 (inv)** | **Ex2 (inv)** | **Ex3 (comp)** | **Ex4 (comp)** | **Ex5 (comp)** |
|---|---|---|---|---|---|---|
| Facteurs solaire « g » | ≤ 30 % | 30% | 29% | 30% | 28% | 25% |
| Sélectivité « s » | ≈2% | 1,8 | 1,8 | 2,0 | 2,0 | 2,0 |
| T_{L}% | > 50,0 % | 53,2 | 55,5 | 59,8 | 54,8 | 50,0 |
| a*_{T} | <0 | -4,0 | -4,4 | -5,3 | -7,5 | -5 |
| b*_{T} | <3 | 1 | 2,7 | 2,9 | 3,8 | 4,5 |
| R_{Lex}t% | >25 | 30 | 26 | 13 | 18 | 30 |
| a*_{Rext} | <0 | -0,8 | -3,5 | -4,8 | -3 | -1 |
| b*_{Rext} | <0 | -1,5 | -6,7 | -10,1 | -7,3 | -4 |
| R_{Lint}% | - | 27,5 | 22,2 | 15,8 | 21,5 | 26 |
| a*_{Rint} | <0 | -6,0 | -9,7 | -0,6 | 7,7 | -4 |
| b*_{Rint} | <0 | -0,9 | -10,3 | 1,1 | -3,3 | -6,4 |

Selon l'invention, il est possible de réaliser un vitrage comprenant un empilement à trois couches fonctionnelles métalliques qui présente un aspect argent brillant en réflexion côté extérieur, une transmission lumineuse supérieure à 50 %, une sélectivité élevée, une réflexion lumineuse élevée et un facteur solaire faible.

Les exemples selon l'invention présentent tous une coloration en transmission agréable et douce, de préférence dans la gamme des bleus ou bleus-verts.

On voit sur les données reportées dans le tableau 3 que les vitrages selon l'invention (exemples 1 et 2) présentent à la fois un facteur solaire inférieur ou égal à 30 % pour une sélectivité légèrement inférieure à 2. Ces vitrages présentent en plus une réflexion extérieure au moins supérieure à 25 %, combinée à une valeur faible et négative des facteurs a*_{Rext} et b*_{Rext} permettant l'obtention de l'effet « brillant » recherché. Ces vitrages ont également des couleurs en transmission neutres ou alternativement une teinte légèrement bleue -verte.

## Revendications

1. Matériau comprenant un substrat transparent revêtu sur une face d'un empilement de couches minces comportant successivement à partir de ladite face une alternance de trois couches métalliques fonctionnelles à base d'argent dénommées en partant du substrat première, deuxième et troisième couches fonctionnelles, respectivement Ag1, Ag2 et Ag3 , et de quatre revêtements diélectriques dénommés en partant du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches, de manière que chaque couche métallique fonctionnelle soit disposée entre deux revêtements diélectriques, ledit matériau étant **caractérisé en ce que** :
- l'épaisseur géométrique de la seconde couche fonctionnelle Ag2 est inférieure à l'épaisseur de la première couche fonctionnelle Ag1,
- l'épaisseur géométrique de la seconde couche fonctionnelle Ag2 est inférieure à l'épaisseur de la troisième couche fonctionnelle Ag3,
- le revêtement diélectrique M2 présente une épaisseur optique Eo2 inférieure aux épaisseurs optiques Eo1, Eo3, Eo4 respectivement des revêtements diélectriques M1, M3 et M4.

2. Matériau selon la revendication 1, dans lequel ledit revêtement diélectrique M2 présente une épaisseur optique Eo2 comprise entre 40 et 90 nm, de préférence comprise entre 50 et 70 nm.

3. Matériau selon l'une des revendications précédentes, dans lequel l'épaisseur géométrique de ladite deuxième couche fonctionnelle Ag2 est comprise entre 2 et 10 nanomètres, de préférence entre 5 et 10 nanomètres, voire entre 5 et 8 nanomètres.

4. Matériau selon l'une des revendications précédentes, dans lequel l'épaisseur géométrique de ladite première couche fonctionnelle Ag1 est comprise entre 8 et 20 nanomètres, de préférence entre 10 et 18 nanomètres, voire entre 10 et 16 nanomètres.

5. Matériau selon l'une des revendications précédentes, dans lequel l'épaisseur géométrique de ladite troisième couche fonctionnelle Ag3 est comprise entre 8 et 20 nanomètres, de préférence entre 10 et 18 nanomètres, voire entre 12 et 15 nanomètres.

6. Matériau selon l'une des revendications précédentes, dans lequel l'épaisseur géométrique cumulée desdites couches fonctionnelles Ag1, Ag2 et Ag3 est comprise entre 25 et 50 nanomètres, de préférence est comprise entre 30 et 40 nanomètres.

7. Matériau selon l'une des revendications précédentes, dans lequel ledit revêtement diélectrique M3 présente une épaisseur optique Eo3 supérieure aux épaisseurs optiques Eo1 et Eo4 respectivement des revêtements diélectriques M1 et M4.

8. Matériau selon l'une des revendications précédentes, dans lequel Eo2 < Eo4 < Eo1 < Eo3.

9. Matériau selon l'une des revendications précédentes, dans lequel Eo3 > 1,5 Eo2, de préférence Eo3 > 2 Eo2 et de manière très préférée Eo3 > 2,5 Eo2.

10. Matériau selon l'une des revendications précédentes, dans lequel Eo3 > 1,5 Eo4 et de préférence Eo3 > 2 Eo4.

11. Matériau selon l'une des revendications précédentes, dans lequel Eo3 > 1,5 Eo1.

12. Matériau selon l'une des revendications précédentes, dans lequel :
- Eo1 est compris entre 75 et 120 nm,
- Eo2 est compris entre 50 et 70 nm,
- Eo3 est comprise entre 130 et 190 nm et
- Eo4 est compris entre 70 et 110 nm.

13. Matériau selon l'une des revendications précédentes, dans lequel le rapport de l'épaisseur de la première couche fonctionnelle Ag1 sur l'épaisseur de la deuxième couche fonctionnelle Ag2 est supérieur à 1,3 et/ou le rapport de l'épaisseur de la troisième couche fonctionnelle Ag3 sur l'épaisseur de la seconde couche fonctionnelle Ag2 est supérieur à 1,3.

14. Matériau selon l'une des revendications précédentes, dans lequel l'épaisseur de la troisième couche fonctionnelle Ag3 est supérieure à l'épaisseur de la première couche fonctionnelle Ag1.

15. Matériau selon l'une quelconque des revendications précédentes, dans lequel l'empilement comprend en outre au moins une couche de blocage située au contact d'une couche métallique fonctionnelle, et de préférence en ce que chaque couche fonctionnelle est au contact d'une couche de blocage situées au-dessus d'elle.

16. Matériau selon l'une quelconque des revendications précédentes, dans lequel ledit empilement comprend, en partant du substrat transparent :
- un premier revêtement diélectrique M1 comprenant de préférence au moins une couche diélectrique à fonction barrière et une couche diélectrique à fonction stabilisante,
- éventuellement une couche de blocage,
- une première couche fonctionnelle Ag1,
- éventuellement une couche de blocage,
- un deuxième revêtement diélectrique M2 comprenant de préférence au moins un couche diélectrique à fonction stabilisante inférieure, une couche diélectrique à fonction barrière et une couche diélectrique à fonction stabilisante supérieure,
- éventuellement une couche de blocage,
- une deuxième couche fonctionnelle Ag2,
- éventuellement une couche de blocage,
- un troisième revêtement diélectrique M3 comprenant de préférence au moins un couche diélectrique à fonction stabilisante inférieure, une couche diélectrique à fonction barrière et une couche diélectrique à fonction stabilisante supérieure,
- éventuellement une couche de blocage,
- une troisième couche fonctionnelle Ag3,
- éventuellement une couche de blocage,
- un quatrième revêtement diélectrique M4 comprenant de préférence au moins une couche diélectrique à fonction stabilisante, une couche diélectrique à fonction barrière et éventuellement une couche de protection.

17. Vitrage comprenant au moins un matériau selon l'une quelconque des revendications 1 à 16.

18. Vitrage selon la revendication 17, caractérisé en qu'il est sous forme de vitrage monolithique, feuilleté ou multiple, en particulier double vitrage ou triple vitrage.

## Patentansprüche

1. Material, umfassend ein transparentes Substrat, das auf einer Seite mit einer Stapelung von Dünnschichten beschichtet ist, enthaltend nacheinander ausgehend von der Seite eine Abfolge von drei funktionellen Metallschichten auf Silberbasis, die vom Substrat ausgehend jeweils als erste, zweite und dritte funktionelle Schicht Ag1, Ag2 und Ag3 bezeichnet werden, und vier dielektrische Beschichtungen, die vom Substrat ausgehend jeweils als M1, M2, M3 und M4 mit den jeweiligen optischen Dicken Eo1, Eo2, Eo3, Eo4 bezeichnet werden, wobei jede dielektrische Beschichtung eine dielektrische Schicht oder ein Ensemble dielektrischer Schichten enthält, sodass jede funktionelle Metallschicht zwischen zwei dielektrischen Beschichtungen angeordnet ist, wobei das Material **dadurch gekennzeichnet ist, dass**:
- die geometrische Dicke der zweiten funktionellen Schicht Ag2 geringer als die Dicke der ersten funktionellen Schicht Ag1 ist,
- die geometrische Dicke der zweiten funktionellen Schicht Ag2 geringer als die Dicke der dritten funktionellen Schicht Ag3 ist,
- die dielektrische Beschichtung M2 eine optische Dicke Eo2 aufweist, die geringer als die jeweiligen optischen Dicken Eo1, Eo3, Eo4 der dielektrischen Beschichtungen M1, M3 und M4 ist.

2. Material nach Anspruch 1, wobei die dielektrische Beschichtung M2 eine optische Dicke Eo2 zwischen 40 und 90 nm, vorzugsweise zwischen 50 und 70 nm, aufweist.

3. Material nach einem der vorstehenden Ansprüche, wobei die geometrische Dicke der zweiten funktionellen Schicht Ag2 zwischen 2 und 10 Nanometern, vorzugsweise zwischen 5 und 10 Nanometern, oder sogar zwischen 5 und 8 Nanometern liegt.

4. Material nach einem der vorstehenden Ansprüche, wobei die geometrische Dicke der ersten funktionellen Schicht Ag1 zwischen 8 und 20 Nanometern, vorzugsweise zwischen 10 und 18 Nanometern, oder sogar zwischen 10 und 16 Nanometern liegt.

5. Material nach einem der vorstehenden Ansprüche, wobei die geometrische Dicke der dritten funktionellen Schicht Ag3 zwischen 8 und 20 Nanometern, vorzugsweise zwischen 10 und 18 Nanometern, oder sogar zwischen 12 und 15 Nanometern liegt.

6. Material nach einem der vorstehenden Ansprüche, wobei die kumulierte geometrische Dicke der funktionellen Schichten Ag1, Ag2 und Ag3 zwischen 25 und 50 Nanometern, vorzugsweise zwischen 30 und 40 Nanometern, liegt.

7. Material nach einem der vorstehenden Ansprüche, wobei die dielektrische Beschichtung M3 eine optische Dicke Eo3 aufweist, die größer als die jeweiligen optischen Dicken Eo1 und Eo4 der dielektrischen Beschichtungen M1 und M4 ist.

8. Material nach einem der vorstehenden Ansprüche, wobei Eo2 < Eo4 < Eo1 < Eo3.

9. Material nach einem der vorstehenden Ansprüche, wobei Eo3 > 1,5 Eo2, vorzugsweise Eo3 > 2 Eo2 und auf sehr bevorzugte Weise Eo3 > 2,5 Eo2.

10. Material nach einem der vorstehenden Ansprüche, wobei Eo3 > 1,5 Eo4 und vorzugsweise Eo3 > 2 Eo4.

11. Material nach einem der vorstehenden Ansprüche, wobei Eo3 > 1,5 Eo1.

12. Material nach einem der vorstehenden Ansprüche, wobei:
- Eo1 zwischen 75 und 120 nm liegt,
- Eo2 zwischen 50 und 70 nm liegt,
- Eo3 zwischen 130 und 190 nm liegt und
- Eo4 zwischen 70 und 110 nm liegt.

13. Material nach einem der vorstehenden Ansprüche, wobei das Verhältnis der Dicke der ersten funktionellen Schicht Ag1 zur Dicke der zweiten funktionellen Schicht Ag2 größer als 1,3 ist und/oder wobei das Verhältnis der Dicke der dritten funktionellen Schicht Ag3 zur Dicke der zweiten funktionellen Schicht Ag2 größer als 1,3 ist.

14. Material nach einem der vorstehenden Ansprüche, wobei die Dicke der dritten funktionellen Schicht Ag3 größer als die Dicke der ersten funktionellen Schicht Ag1 ist.

15. Material nach einem der vorstehenden Ansprüche, wobei die Stapelung weiterhin mindestens eine Blockierschicht, situiert in Kontakt mit einer funktionellen Metallschicht, umfasst und wobei vorzugsweise jede funktionelle Schicht in Kontakt mit einer darüber situierten Blockierschicht steht.

16. Material nach einem der vorstehenden Ansprüche, wobei die Stapelung von dem transparenten Substrat ausgehend umfasst:
- eine erste dielektrische Beschichtung M1, die mindestens eine dielektrische Schicht mit Barrierefunktion und eine dielektrische Schicht mit stabilisierender Funktion umfasst,
- gegebenenfalls eine Blockierschicht,
- eine erste funktionelle Schicht Ag1,
- gegebenenfalls eine Blockierschicht,
- eine zweite dielektrische Beschichtung M2, die vorzugsweise mindestens eine untere dielektrische Schicht mit stabilisierender Funktion, eine dielektrische Schicht mit Barrierefunktion und eine obere dielektrische Schicht mit stabilisierender Funktion umfasst,
- gegebenenfalls eine Blockierschicht,
- eine zweite funktionelle Schicht Ag2,
- gegebenenfalls eine Blockierschicht,
- eine dritte dielektrische Beschichtung M3, die vorzugsweise mindestens eine untere dielektrische Schicht mit stabilisierender Funktion, eine dielektrische Schicht mit Barrierefunktion und eine obere dielektrische Schicht mit stabilisierender Funktion umfasst,
- gegebenenfalls eine Blockierschicht,
- eine dritte funktionelle Schicht Ag3,
- gegebenenfalls eine Blockierschicht,
- eine vierte dielektrische Beschichtung M4, die vorzugsweise mindestens eine dielektrische Schicht mit stabilisierender Funktion, eine dielektrische Schicht mit Barrierefunktion und gegebenenfalls eine Schutzschicht umfasst.

17. Verglasung, die mindestens ein Material nach einem der Ansprüche 1 bis 16 umfasst.

18. Verglasung nach Anspruch 17, **dadurch gekennzeichnet, dass** sie in Form von Einscheiben-, Verbund- oder Mehrfachverglasung, insbesondere Doppel- oder Dreifachverglasung, vorliegt.

## Claims

1. A material comprising a transparent substrate coated on one face with a stack of thin layers successively comprising, starting from said face, an alternation of three silver-based functional metal layers denoted, starting from the substrate, first, second and third functional layers respectively Ag1, Ag2 and Ag3, and of four dielectric coatings denoted, starting from the substrate, M1, M2, M3 and M4, with optical thicknesses respectively To1, To2, To3 and To4, each dielectric coating comprising a dielectric layer or a dielectric assembly of layers, so that each functional metal layer is positioned between two dielectric coatings, said material being **characterized in that**:
- the geometrical thickness of the second functional layer Ag2 is less than the thickness of the first functional layer Ag1,
- the geometrical thickness of the second functional layer Ag2 is less than the thickness of the third functional layer Ag3,
- the dielectric coating M2 exhibits a lower optical thickness To2 than the optical thicknesses To1, To3 and To4 respectively of the dielectric coatings M1, M3 and M4.

2. The material as claimed in claim 1, in which said dielectric coating M2 exhibits an optical thickness To2 of between 40 and 90 nm, preferably of between 50 and 70 nm.

3. The material as claimed in either of the preceding claims, in which the geometrical thickness of said second functional layer Ag2 is between 2 and 10 nanometers, preferably between 5 and 10 nanometers, indeed even between 5 and 8 nanometers.

4. The material as claimed in one of the preceding claims, in which the geometrical thickness of said first functional layer Ag1 is between 8 and 20 nanometers, preferably between 10 and 18 nanometers, indeed even between 10 and 16 nanometers.

5. The material as claimed in one of the preceding claims, in which the geometrical thickness of said third functional layer Ag3 is between 8 and 20 nanometers, preferably between 10 and 18 nanometers, indeed even between 12 and 15 nanometers.

6. The material as claimed in one of the preceding claims, in which the cumulative geometrical thickness of said functional layers Ag1, Ag2 and Ag3 is between 25 and 50 nanometers, preferably is between 30 and 40 nanometers.

7. The material as claimed in one of the preceding claims, in which said dielectric coating M3 exhibits a greater optical thickness To3 than the optical thicknesses To1 and To4 respectively of the dielectric coatings M1 and M4.

8. The material as claimed in one of the preceding claims, in which To2 < To4 < To1 < To3.

9. The material as claimed in one of the preceding claims, in which To3 > 1.5 To2, preferably To3 > 2 To2 and very preferably To3 > 2.5 To2.

10. The material as claimed in one of the preceding claims, in which To3 > 1.5 To4 and preferably To3 > 2 To4.

11. The material as claimed in one of the preceding claims, in which To3 > 1.5 To1.

12. The material as claimed in one of the preceding claims, in which:
- To1 is between 75 and 120 nm,
- To2 is between 50 and 70 nm,
- To3 is between 130 and 190 nm and
- To4 is between 70 and 110 nm.

13. The material as claimed in one of the preceding claims, in which the ratio of the thickness of the first functional layer Ag1 to the thickness of the second functional layer Ag2 is greater than 1.3 and/or the ratio of the thickness of the third functional layer Ag3 to the thickness of the second functional layer Ag2 is greater than 1.3.

14. The material as claimed in one of the preceding claims, in which the thickness of the third functional layer Ag3 is greater than the thickness of the first functional layer Ag1.

15. The material as claimed in any one of the preceding claims, in which the stack additionally comprises at least one blocking layer located in contact with a functional metal layer, and preferably in that each functional layer is in contact with a blocking layer located above it.

16. The material as claimed in any one of the preceding claims, in which said stack comprises, starting from the transparent substrate:
- a first dielectric coating M1 preferably comprising at least one dielectric layer having a barrier function and one dielectric layer having a stabilizing function,
- optionally a blocking layer,
- a first functional layer Ag1,
- optionally a blocking layer,
- a second dielectric coating M2 preferably comprising at least one lower dielectric layer having a stabilizing function, one dielectric layer having a barrier function and one upper dielectric layer having a stabilizing function,
- optionally a blocking layer,
- a second functional layer Ag2,
- optionally a blocking layer,
- a third dielectric coating M3 preferably comprising at least one lower dielectric layer having a stabilizing function, one dielectric layer having a barrier function and one upper dielectric layer having a stabilizing function,
- optionally a blocking layer,
- a third functional layer Ag3,
- optionally a blocking layer,
- a fourth dielectric coating M4 preferably comprising at least one dielectric layer having a stabilizing function, one dielectric layer having a barrier function and optionally one protective layer.

17. A glazing comprising at least one material as claimed in any one of claims 1 to 16.

18. The glazing as claimed in claim 17, **characterized in that** it is in the form of a monolithic, laminated or multiple glazing, in particular a double glazing or a triple glazing.
